# EUROPEAN PATENT SPECIFICATION

(11) **EP 3 718 944 B1**
(45) Date of publication and mention of the grant of the patent: **25.11.2026**
(21) Application number: 20168314.1
(22) Date of filing: 06.04.2020
(51) Int. Cl.: B66B 5/00

(54) **ELEVATOR MAINTENANCE APP MATCHING MECHANICS POSITION WITH FAULTS DETECTED**
AUFZUGSWARTUNGSANWENDUNG ZUM ABGLEICH DER MECHANIKPOSITION MIT ERKANNTEN FEHLERN
APPLICATION DE MAINTENANCE D'ASCENSEUR FAISANT CORRESPONDRE LA POSITION DES MÉCANICIENS AUX DÉFAUTS DÉTECTÉS

(30) Priority: 05.04.2019 US 201916376330
(43) Date of publication of application: 07.10.2020
(73) Proprietor: Otis Elevator Company, Farmington, Connecticut 06032 (US)
(72) Inventor: PAHLKE, Derk Oscar, 133507 Berlin (DE); BASTUBBE, Robert, 14979 Grossbeeren (DE)
(74) Representative: Dehns

(56) References cited:
- EP-A1- 1 915 310
- WO-A1-2014/200457
- CN-A- 107 500 072
- US-A1- 2005 077 117
- US-A1- 2018 282 118
- US-A1- 2019 010 022
- US-B2- 10 183 837
- DATABASE WPI Week 201807, Derwent World Patents Index; AN 2018-01697D

## Description

### BACKGROUND

The embodiments herein relate to the field of elevator systems, and specifically to a method and apparatus for monitoring an elevator car of an elevator system.

A position of a conveyance apparatus within a conveyance systems, such as, for example, elevator systems, escalator systems, and moving walkways may typically be difficult to determine. WO 2014/200457 discloses a method of detecting changes in an elevator characteristic over time and providing a notification to perform an action on the elevator. US2018/0282118A1 discloses a method of interacting with an elevator system, including receiving an issue report from a user mobile device, determining a maintenance issue of the elevator system in response to at least one of the issue report and the performance data, and transmitting the maintenance issue to a maintenance device.

### BRIEF SUMMARY

According to a first aspect of the present invention, a method of monitoring an elevator within an elevator system is provided, as claimed in claim 1. According to a second aspect of the present invention, a controller for monitoring an elevator car within an elevator system is provided as claimed in claim 10.

In an embodiment, prior to displaying the health level for the elevator system at the first elevator car location and the first identifier for the first elevator car location on a display device, the method further includes: normalizing the first identifier for the first elevator car location to a standard value.

In an embodiment, determining a current location of an individual within the elevator system further includes: detecting an ambient air pressure proximate the individual; and determining an elevation in response to the ambient air pressure.

In an embodiment, determining a current location of an individual within the elevator system further includes: detecting a wireless signal of a mobile device being carried by an individual; and determining received signal strength of the mobile device; and determining an elevation of the individual in response to the received signal strength of the mobile device.

In an embodiment, determining a current location of an individual within the elevator system, further includes: determining that the individual is currently located within the elevator car; determining a current location of the elevator car; and determining that the current location of the individual is equivalent to the current location of the elevator car.

In an embodiment the current location of the individual is located at the first elevator car location.

In an embodiment the current location of the individual is not located at the first elevator car location.

In an embodiment the method may include: obtaining a health level of the elevator system at a second elevator car location; determining a second identifier for the second elevator car location; and displaying the health level for the elevator system at the second elevator car location and the second identifier for the second elevator car location on a display device.

In an embodiment, prior to displaying the health level for the elevator system at the first elevator car location and the first identifier for the first elevator car location on a display device, the method further includes: normalizing the first identifier for the first elevator car location to a standard value, and wherein prior to displaying the health level for the elevator system at the second elevator car location and the second identifier for the second elevator car location on a display device, the method further includes normalizing the first identifier for the first elevator car location to a standard value.

In an embodiment the current location of the individual is located at the second elevator car location.

In an embodiment the current location of the individual is not located at the second elevator car location.

According to a third aspect of the present invention, a computer program product embodied on a non-transitory computer readable medium is provided as claimed in claim 11.

Technical effects of embodiments of the present invention include simultaneously displaying elevator system health along with a location of an individual within the elevator system on a single display device.

The foregoing features and elements may be combined in various combinations without exclusivity, unless expressly indicated otherwise, within the scope of the appended claims. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present invention is illustrated by way of example and not limited in the accompanying figures in which like reference numerals indicate similar elements.
FIG. 1 is a schematic illustration of an elevator system that may employ various embodiments of the present invention;
FIG. 2 is a schematic illustration of a sensor system for the elevator system of FIG. 1, in accordance with an embodiment of the invention;
FIG. 3 is a schematic illustration of the location of sensing apparatus of the sensor system of FIG. 2, in accordance with an embodiment of the invention;
FIG. 4 is a schematic illustration of a sensing apparatus of the sensor system of FIG. 2, in accordance with an embodiment of the invention; and
FIG. 5 is a flow chart of a method of monitoring an elevator car within an elevator system, in accordance with the invention; and
FIG. 6 illustrates a mobile device graphical user interface for viewing and interacting with an application, in accordance with an embodiment of the invention.

### DETAILED DESCRIPTION

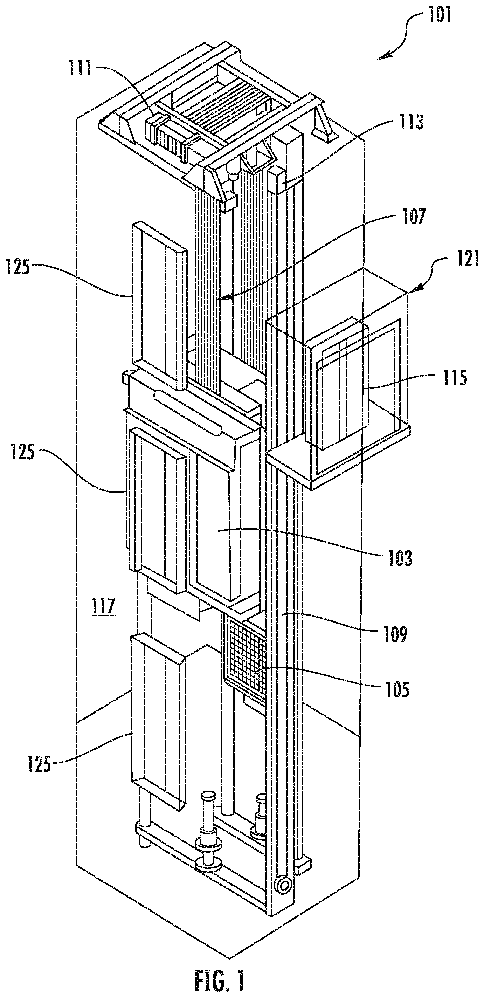

FIG. 1 is a perspective view of an elevator system 101 including an elevator car 103, a counterweight 105, a tension member 107, a guide rail 109, a machine 111, a position reference system 113, and a controller 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the invention, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present invention. For example, embodiments may be employed in ropeless elevator systems using a linear motor to impart motion to an elevator car. Embodiments may also be employed in ropeless elevator systems using a hydraulic lift to impart motion to an elevator car. FIG. 1 is merely a non-limiting example presented for illustrative and explanatory purposes.

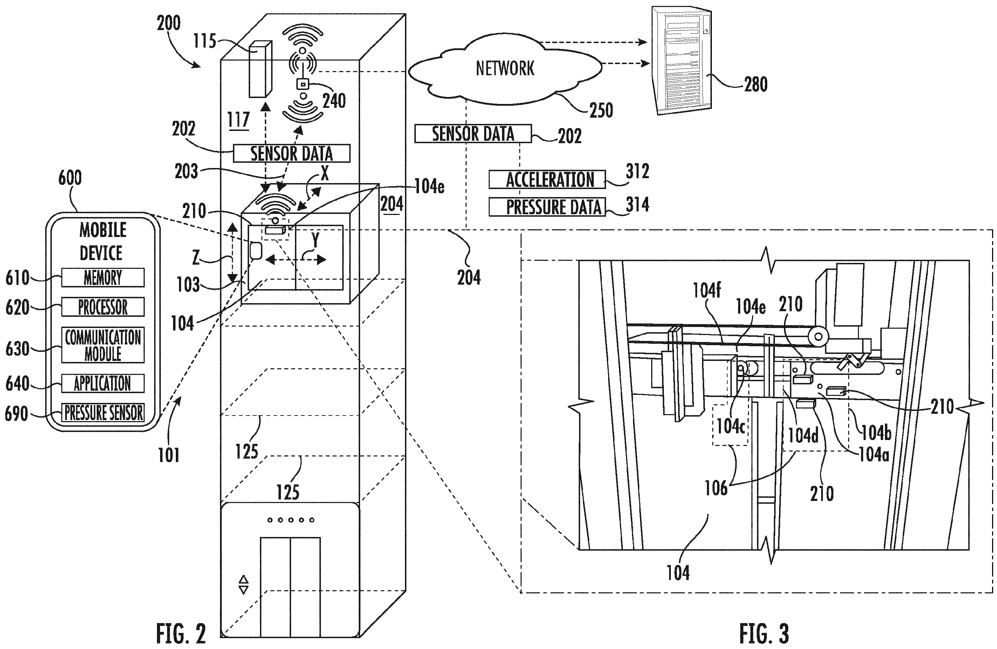

Referring now to FIG. 2, with continued referenced to FIG. 1, a view of a sensor system 200 including a sensing apparatus 210 is illustrated, according to an embodiment of the present invention. The sensing apparatus 210 is configured to detect sensor data 202 of the elevator car 103 and transmit the sensor data 202 to a remote device 280. Sensor data 202 may include but is not limited to pressure data 314, vibratory signatures (i.e., vibrations over a period of time) or accelerations 312 and derivatives or integrals of accelerations 312 of the elevator car 103, such as, for example, distance, velocity, jerk, jounce, snap... etc. Sensor data 202 may also include light, sound, humidity, and temperature, or any other desired data parameter. The pressure data 314 may include atmospheric air pressure within the elevator shaft 117. It should be appreciated that, although particular systems are separately defined in the schematic block diagrams, each or any of the systems may be otherwise combined or separated via hardware and/or software. For example, the sensing apparatus 210 may be a single sensor or may be multiple separate sensors that are interconnected.

In an embodiment, the sensing apparatus 210 is configured to transmit sensor data 202 that is raw and unprocessed to the controller 115 of the elevator system 101 for processing. In another embodiment, the sensing apparatus 210 is configured to process the sensor data 202 prior to transmitting the sensor data 202 to the controller 115. In another embodiment, the sensing apparatus 210 is configured to transmit sensor data 202 that is raw and unprocessed to a remote system 280 for processing. In yet another embodiment, the sensing apparatus 210 is configured to process the sensor data 202 prior to transmitting the sensor data 202 to the remote device 280.

The processing of the sensor data 202 may reveal data, such as, for example, a number of elevator door openings/closings, elevator door time, vibrations, vibratory signatures, a number of elevator rides, elevator ride performance, elevator flight time, probable car position (e.g. elevation, floor number), releveling events, rollbacks, elevator car 103 x, y acceleration at a position: (i.e., rail topology), elevator car 103 x, y vibration signatures at a position: (i.e., rail topology), door performance at a landing number, nudging event, vandalism events, emergency stops, etc.

The remote device 280 may be a computing device, such as, for example, a desktop or cloud computer. The remote device 280 may also be a mobile computing device that is typically carried by a person, such as, for example a smartphone, PDA, smartwatch, tablet, laptop, etc. The remote device 280 may also be two separate devices that are synced together, such as, for example, a cellular phone and a desktop computer synced over an internet connection. The remote device 280 may also be a cloud computing network.

The sensing apparatus 210 is configured to transmit the sensor data 202 to the controller 115 or the remote device 280 via short-range wireless protocols 203 and/or long-range wireless protocols 204. Short-range wireless protocols 203 may include but are not limited to Bluetooth, Wi-Fi, HaLow (801.11ah), zWave, Zigbee, or Wireless M-Bus. Using short-range wireless protocols 203, the sensing apparatus 210 is configured to transmit the sensor data 202 to directly to the controller 115 or to a local gateway device 240 and the local gateway device 240 is configured to transmit the sensor data 202 to the remote device 280 through a network 250 or to the controller 115. The network 250 may be a computing network, such as, for example, a cloud computing network, cellular network, or any other computing network known to one of skill in the art. Using long-range wireless protocols 204, the sensing apparatus 210 is configured to transmit the sensor data 202 to the remote device 280 through a network 250. Long-range wireless protocols 204 may include but are not limited to cellular, satellite, LTE (NB-IoT, CAT M1), LoRa, Satellite, Ingenu, or SigFox.

The sensing apparatus 210 may be configured to detect sensor data 202 including acceleration in any number of directions. In an embodiment, the sensing apparatus may detect sensor data 202 including accelerations 312 along three axis, an X axis, a Y axis, and a Z axis, as show in in FIG. 2. The X axis may be perpendicular to the doors 104 of the elevator car 103, as shown in FIG. 2. The Y axis may be parallel to the doors 104 of the elevator car 103, as shown in FIG. 2. The Z axis may be aligned vertically parallel with the elevator shaft 117 and pull of gravity, as shown in FIG. 2. Vibratory signatures may be generated along the X-axis and the Y-axis as the elevator car 103 moves along the Z-axis. The vibratory signatures may be utilized to determine a location of the elevator car 103 and/or a health level of the elevator system 101.

Also shown in FIG. 2 is a mobile device 600. The mobile device 600 may belong to an elevator mechanic/technician working on the elevator system 100. The mobile device 600 may be a mobile computing device that is typically carried by a person, such as, for example a smart phone, PDA, smart watch, tablet, laptop, etc. The mobile device 600 may include a touch screen (not shown). The mobile device 600 may include a processor 620, memory 610, a communication module 630, and an application, as shown in FIG. 2. The processor 620 can be any type or combination of computer processors, such as a microprocessor, microcontroller, digital signal processor, application specific integrated circuit, programmable logic device, and/or field programmable gate array. The memory 610 is an example of a non-transitory computer readable storage medium tangibly embodied in the mobile device 600 including executable instructions stored therein, for instance, as firmware. The communication module 630 may implement one or more communication protocols, such as, for example, short-range wireless protocols 203 and long-range wireless protocols 204. The communication module 630 may be in communication with at least one of the controller 115, the sensing apparatus 210, the network 250, and the remote device 280. The communication module 630 is configured to receive a health level of the elevator system 101 from at least one of the controller 115, the sensing apparatus 210, the network 250, and the remote device 280. The application 640 is configured to generate a graphical user interface on the mobile device 600. The application 640 may be computer software installed directly on the memory 610 of the mobile device 600 and/or installed remotely and accessible through the mobile device 600 (e.g., software as a service).

The mobile device 600 may also include a pressure sensor 690 configured to detect an ambient air pressure local to the mobile device 600, such as, for example, atmospheric air pressure. The pressure sensor 690 may be a pressure altimeter or barometric altimeter in two non-limiting examples. The pressure sensor 690 is in communication with the processor 620 and the processor 620 may be configured to determine a height or elevation of the mobile device 600 in response to the ambient air pressure detected local to the mobile device 600. A height or elevation of the mobile device may be determined using other location determination methods, including, but not limited to, cell triangulation, a global positioning system (GPS) and/or detection of wireless signal strength (e.g., received signal strength (RSS) using Bluetooth, Wi-FI,...etc).

FIG. 3 shows a possible installation location of the sensing apparatus 210 within the elevator system 101. The sensing apparatus 210 may include a magnet (not show) to removably attach to the elevator car 103. In the illustrated embodiment shown in FIG. 3, the sensing apparatus 210 may be installed on the door hanger 104a and/or the door 104 of the elevator system 101. It is understood that the sensing apparatus 210 may also be installed in other locations other than the door hanger 104a and the door 104 of the elevator system 101. It is also understood that multiple sensing apparatus 210 are illustrated in FIG. 3 to show various locations of the sensing apparatus 210 and the embodiments disclosed herein may include one or more sensing apparatus 210. In another embodiment, the sensing apparatus 210 may be attached to a door header 104e of a door 104 of the elevator car 103. In another embodiment, the sensing apparatus 210 may be located on a door header 104e proximate a top portion 104f of the elevator car 103. In another embodiment, the sensing apparatus 210 is installed elsewhere on the elevator car 103, such as, for example, directly on the door 104.

As shown in FIG. 3, the sensing apparatus 201 may be located on the elevator car 103 in the selected areas 106, as shown in FIG. 3. The doors 104 are operably connected to the door header 104e through a door hanger 104a located proximate a top portion 104b of the door 104. The door hanger 104a includes guide wheels 104c that allow the door 104 to slide open and close along a guide rail 104d on the door header 104e. Advantageously, the door hanger 104a is an easy to access area to attach the sensing apparatus 210 because the door hanger 104a is accessible when the elevator car 103 is at landing 125 and the elevator door 104 is open. Thus, installation of the sensing apparatus 210 is possible without taking special measures to take control over the elevator car 103. For example, the additional safety of an emergency door stop to hold the elevator door 104 open is not necessary as door 104 opening at landing 125 is a normal operation mode. The door hanger 104a also provides ample clearance for the sensing apparatus 210 during operation of the elevator car 103, such as, for example, door 104 opening and closing. Due to the mounting location of the sensing apparatus 210 on the door hanger 104a, the sensing apparatus 210 may detect open and close motions (i.e., acceleration) of the door 104 of the elevator car 103 and a door at the landing 125. Additionally mounting the sensing apparatus 210 on the hanger 104a allows for recording of a ride quality of the elevator car 103.

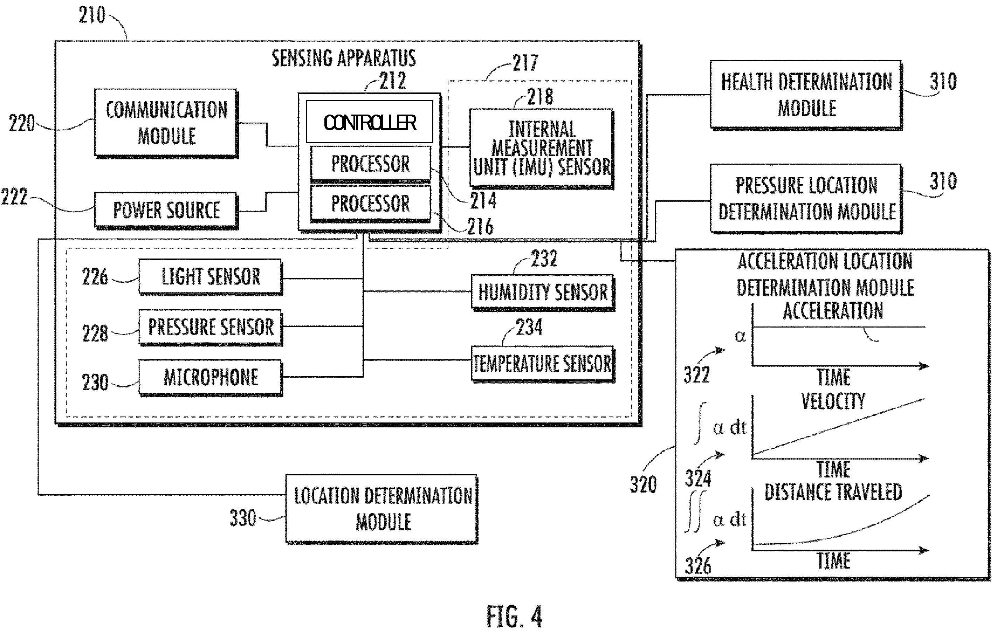

FIG. 4 illustrates a block diagram of the sensing apparatus 210 of the sensing system of FIGs. 2 and 3. It should be appreciated that, although particular systems are separately defined in the schematic block diagram of FIG. 4, each or any of the systems may be otherwise combined or separated via hardware and/or software. As shown in FIG. 4, the sensing apparatus 210 may include a controller 212, a plurality of sensors 217 in communication with the controller 212, a communication module 220 in communication with the controller 212, and a power source 222 electrically connected to the controller 212.

The plurality of sensors 217 includes an inertial measurement unit (IMU) sensor 218 configured to detect sensor data 202 including accelerations 312 of the sensing apparatus 210 and the elevator car 103 when the sensing apparatus 210 is attached to the elevator car 103. The IMU sensor 218 may be a sensor, such as, for example, an accelerometer, a gyroscope, or a similar sensor known to one of skill in the art. The accelerations 312 detected by the IMU sensor 218 may include accelerations 312 as well as derivatives or integrals of accelerations, such as, for example, velocity, jerk, jounce, snap... etc. The IMU sensor 218 is in communication with the controller 212 of the sensing apparatus 210.

The plurality of sensors 217 includes a pressure sensor 228 is configured to detect sensor data 202 including pressure data 314, such as, for example, atmospheric air pressure within the elevator shaft 117. The pressure sensor 228 may be a pressure altimeter or barometric altimeter in two non-limiting examples. The pressure sensor 228 is in communication with the controller 212.

The plurality of sensors 217 may also include additional sensors including but not limited to a light sensor 226, a pressure sensor 228, a microphone 230, a humidity sensor 232, and a temperature sensor 234. The light sensor 226 is configured to detect sensor data 202 including light exposure. The light sensor 226 is in communication with the controller 212. The microphone 230 is configured to detect sensor data 202 including audible sound and sound levels. The microphone 230 is in communication with the controller 212. The humidity sensor 232 is configured to detect sensor data 202 including humidity levels. The humidity sensor 232 is in communication with the controller 212. The temperature sensor 234 is configured to detect sensor data 202 including temperature levels. The temperature sensor 234 is in communication with the controller 212.

The controller 212 of the sensing apparatus 210 includes a processor 214 and an associated memory 216 comprising computer-executable instructions that, when executed by the processor 214, cause the processor 214 to perform various operations, such as, for example, processing the sensor data 202 collected by the IMU sensor 218, the light sensor 226, the pressure sensor 228, the microphone 230, the humidity sensor 232, and the temperature sensor 234. In an embodiment, the controller 212 may process the accelerations 312 and/or the pressure data 314 in order to determine a probable location of the elevator car 103, discussed further below. The processor 214 may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 216 may be a storage device, such as, for example, a random access memory (RAM), read only memory (ROM), or other electronic, optical, magnetic or any other computer readable medium.

The power source 222 of the sensing apparatus 210 is configured to store and supply electrical power to the sensing apparatus 210. The power source 222 may include an energy storage system, such as, for example, a battery system, capacitor, or other energy storage system known to one of skill in the art. The power source 222 may also generate electrical power for the sensing apparatus 210. The power source 222 may also include an energy generation or electricity harvesting system, such as, for example synchronous generator, induction generator, or other type of electrical generator known to one of skill in the art.

The sensing apparatus 210 includes a communication module 220 configured to allow the controller 212 of the sensing apparatus 210 to communicate with the remote device 280 or controller 115 through at least one of short-range wireless protocols 203 and long-range wireless protocols 204. The communication module 220 may be configured to communicate with the remote device 280 using short-range wireless protocols 203, such as, for example, Bluetooth, Wi-Fi, HaLow (801.11ah), Wireless M-Bus, zWave, Zigbee, or other short-range wireless protocol known to one of skill in the art. Using short-range wireless protocols 203, the communication module 220 is configured to transmit the sensor data 202 to a local gateway device 240 and the local gateway device 240 is configured to transmit the sensor data to a remote device 280 through a network 250, as described above. The communication module 220 may be configured to communicate with the remote device 280 using long-range wireless protocols 204, such as for example, cellular, LTE (NB-IoT, CAT M1), LoRa, Ingenu, SigFox, Satellite, or other long-range wireless protocol known to one of skill in the art. Using long-range wireless protocols 204, the communication module 220 is configured to transmit the sensor data 202 to a remote device 280 through a network 250. In an embodiment, the short-range wireless protocol 203 is sub GHz Wireless M-Bus. In another embodiment, the long-range wireless protocol is Sigfox. In another embodiment, the long-range wireless protocol is LTE NB-IoT or CAT M1 with 2G fallback.

The sensing apparatus 210 includes a location determination module 330 configured to determine a location (i.e., position) of the elevator car 103 within the elevator shaft 117. The location of the elevator car 103 may be fixed locations along the elevator shaft 117, such as for example, the landings 125 of the elevator shaft 117. The locations may be equidistantly spaced apart along the elevator shaft 117 or intermittently spaced apart along the elevator shaft 117.

The location determination module 330 may utilize various approaches to determine a location of the elevator car 103 within the elevator shaft 117. The location determination module 330 may be configured to determine a location of the elevator car 103 within the elevator shaft 117 using at least one of a pressure location determination module 310 and an acceleration location determination module 320.

The acceleration location determination module 320 is configured to determine a distance traveled of the elevator car 103 within the elevator shaft 117 in response to the acceleration of the elevator car 103 detected along the Y axis. The sensing apparatus 210 may detect an acceleration along the Y axis shown at 322 and may integrate the acceleration to get a velocity of the elevator car 103 at 324. At 326, the sensing apparatus 210 may also integrate the velocity of the elevator car 103 to determine a distance traveled by the elevator car 103 within the elevator shaft 117 during the acceleration 312 detected at 322. The direction of travel of the elevator car 103 may also be determined in response to the acceleration 312 detected. The location determination module 330 may then determine the location of the elevator car 103 within the elevator shaft 117 in response to a starting location and a distance traveled away from that probable starting location. The starting location may be based upon tracking the past operation and/or movement of the elevator car 103.

The pressure location determination module 310 is configured to detect an atmospheric air pressure within the elevator shaft 117 when the elevator car 103 is in motion and/or stationary using the pressure sensor 228. The pressure detected by the pressure sensor 228 may be associated with a location (e.g., height, elevation) within the elevator shaft 117 through either a look up table or a calculation of altitude using the barometric pressure change in two non-limiting embodiments. The direction of travel of the elevator car 103 may also be determined in response to the change in pressure detected via the pressure data 314. The pressure sensor 228 may need to periodically detect a baseline pressure to account for changes in atmospheric pressure due to local weather conditions. For example, this baseline pressure may need to be detected daily, hourly, or weekly in non-limiting embodiments. In some embodiments, the baseline pressure may be detected whenever the elevator car 103 is stationary, or at certain intervals when the elevator car 103 is stationary. The acceleration of the elevator car 103 may also need to be detected to know when the elevator car 103 is stationary and when the elevator car 103 is stationary the sensing apparatus 210 may need to be offset to compensate the sensor drift and environment drift.

In one embodiment, the pressure location determination module 310 may be used to verify and/or modify a location of the elevator car 102 within the elevator shaft 117 determined by the acceleration location determination module 320. In another embodiment, the acceleration location determination module 320 may be used to verify and/or modify a location of the elevator car 102 within the elevator shaft 117 determined by the pressure location determination module 310. In another embodiment, the pressure location determination module 310 may be prompted to determine a location of the elevator car 103 within the elevator shaft 117 in response to an acceleration detected by the IMU sensor 218.

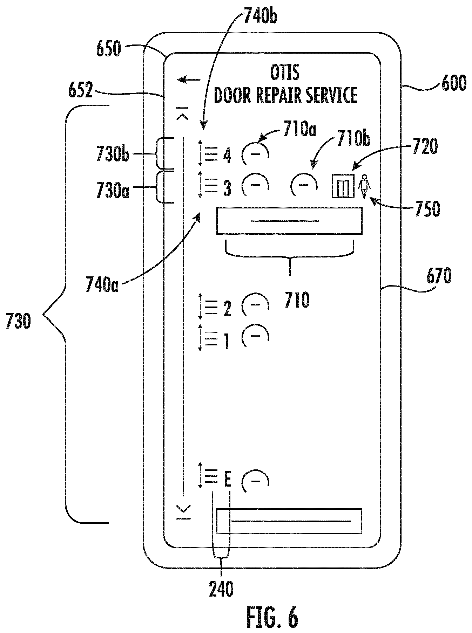

According to the claimed invention, the controller 212 processes the sound detected by the microphone 230, the light detected by the light sensor 226, the humidity detected by the humidity sensor 232, the temperature detected by the temperature sensor 234, the accelerations 312 detected by the IM sensor 218, and/or the pressure data 314 detected by the pressure sensor 228 in order to determine a health level 710 (see FIG. 6) of the elevator system 101. The health level is a graded scale indicating the health of the elevator system 101. In a non-limiting example, the health level may be graded on a scale of one-to-ten with a health level equivalent to one being the lowest health level and a health level equivalent to ten being the highest health level. In another non-limiting example, the health level may be graded on a scale of one-to-one-hundred percent with a health level equivalent to one percent being the lowest health level and a health level equivalent to one-hundred percent being the highest health level. The health level may be determined in response to the accelerations 312 detected. For example, accelerations 312 above a threshold acceleration (e.g., normal operating acceleration) in any one of the X axis, a Y axis, and a Z axis may be indicative of a low health level.

The controller 212 is configured to assign a determined health level to locations along the elevator shaft 117 where the health level was determined. The health level may then be communicated to the mobile device 600 where it is visible to a user of the mobile device 600. The health level of the elevator system 101 may be determined at various location along the elevator shaft 117. In one example, the health level of the elevator system 101 may be determined intermittently along the elevator shaft 117. In another example, the health level of the elevator system 101 may be determined at each landing 125 along the elevator shaft 117.

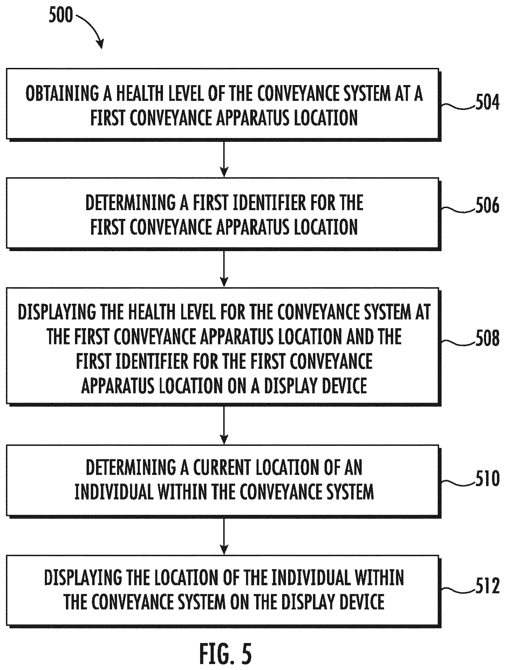

Referring now to FIGS. 5 and 6, with continued reference to FIGS. 1-4. FIG. 5 shows a flow chart of a method 500 of monitoring a conveyance system, in accordance with the claimed invention. The conveyance system is an elevator system 101 and the conveyance apparatus is an elevator car 103. In another embodiment, the method 500 may be performed by the application 640 of the mobile device 600. FIG. 6 illustrates a mobile device 600 generating graphical user interface 670 via display device 650 for viewing and interacting with the application 640 illustrated in FIG. 1. The mobile device 600 may be a laptop computer, smart phone, tablet computer, smart watch, or any other mobile computing device known to one of skill in the art. In the example shown in FIG. 6, the mobile device 600 is a touchscreen smart phone. The mobile device 600 includes the display device 650 and an input device 652, such as, example, a mouse, a touch screen, a scroll wheel, a scroll ball, a stylus pen, a microphone, a camera, etc. In the example shown in FIG. 6, since the mobile device 600 is a touchscreen smart phone, then the display device 650 may also function as an input device 652. FIG. 6 illustrates a graphical user interface 670 generated on the display device 650 of the mobile device 600. A user may interact with the graphical user interface 670 through a selection input, such as, for example, a "click", "touch", verbal command, gesture recognition, or any other input to the user interface 670.

At block 504, a health level 710 of the conveyance system is obtained at a first conveyance apparatus location 730a. The health level 710 may be obtained at a plurality of conveyance apparatus locations 730, including the first conveyance apparatus location 730a, during normal operation of the conveyance system and/or a specific run of the conveyance apparatus. The health level 710 may include a first health level 710a determined at a first time and a second health level 710b determined at a second time. For example, the first health level 710a may be determined prior to maintenance being performed on the conveyance system and a second health level 710b may be determined after the maintenance is performed on the conveyance system.

At block 506, a first identifier 740a for the first conveyance apparatus location 730a is determined. For example, if the conveyance system is an elevator system 101 the first identifier 740a may be a formal floor number of a landing 125. The method 500 may further comprise: normalizing the first identifier 740a for the first conveyance apparatus location 730a to a standard value. For example, the bottom floor may be referred to as the first floor however may later be normalized to floor zero, which may be the standard value. In another example, if the conveyance system is an elevator system 101 that has skipped numbering a 13^{th} floor in naming conventions due to superstition, then the first identifier 740a may indicate that the elevator car 103 is at the 14^{th} floor of the elevator system 101 and the 14^{th} floor may be normalized to the 13^{th} floor. In another example, if the conveyance system is an elevator system 101 that has skipped a number of landings 125 in a building to make the building appear larger, then the identifier 740 of each landing 125 may be normalized by starting from the bottom floor at zero and moving up counting each landing 125 and assigning the appropriate sequential (e.g., 1, 2, 3,... etc.) identifier 740 to each landing 125. If the health level 710 is obtained at a plurality of conveyance apparatus locations 730 then the identifier 740 of each of the plurality of conveyance apparatus locations 730 may be normalized.

At block 508, the health level 710 for the conveyance system at the first conveyance apparatus location 730a and the first identifier 740a for the first conveyance apparatus location 730a are displayed on a display device 650.

At block 510, a current location of an individual 750 within the conveyance system is determined. In an embodiment, the current location of the individual 750 within the conveyance system may be determined by: detecting an ambient air pressure proximate the individual; and determining an elevation in response to the ambient air pressure. In an embodiment, the ambient air pressure proximate the individual may be determined using a pressure sensor 690 of a mobile device 600 carried by the individual.

In another embodiment, the current location of the individual 750 within the conveyance system may be determined by: determining that the individual is currently located within the conveyance apparatus; determining a current location of the conveyance apparatus; and determining that the current location of the individual is equivalent to the current location of the conveyance apparatus. In an embodiment, the individual may be determined to be within the conveyance apparatus by tracking a location of a mobile device 600 carried by the individual. The location of the mobile device 600 may be tracked through GPS, cell triangulation, and/or RSS. In another embodiment, the current location of the individual 750 within the conveyance system may be determined by: detecting a wireless signal of a mobile device 600 being carried by an individual; and determining RSS of the mobile device 600; and determining an elevation of the individual in response to the RSS of the mobile device 600.

The current location of the individual 750 may be located at the first conveyance apparatus location 730a or the individual 750 may not be located at the first conveyance apparatus location 730a (e.g., a second conveyance apparatus location 730b).

At block 512, the location of the individual 750 within the conveyance system is displayed on the display device 650. The location of the individual 750 is displayed relative to the health level 710 for the conveyance system at the first conveyance apparatus location 730a. The current location of the conveyance apparatus 720 may also be determined and displayed on the display device 650.

The method 500 may further comprise: obtaining a health level 710 of the conveyance system at a second conveyance apparatus location 730b; determining a second identifier 740b for the second conveyance apparatus location 730b; and displaying the health level 710 for the conveyance system at the second conveyance apparatus location 730b and the second identifier 740b for the second conveyance apparatus location on a display device 650. The health level 710 for the conveyance system at the second conveyance apparatus location 730b and the second identifier 740b for the second conveyance apparatus location on a display device 650 may be displayed simultaneously with the health level 710 for the conveyance system at the first conveyance apparatus location 730a and the first identifier 740a for the first conveyance apparatus location 730a may be displayed on a display device 650, as shown in FIG. 6. The method 500 may further comprise: normalizing the first identifier 740b for the first conveyance apparatus location 730a to a standard value.

The current location of the individual 750 may be located at the second conveyance apparatus location 730b or the individual 750 may not be located at the second conveyance apparatus location 730b (e.g., the first conveyance apparatus location 730a).

The term "about" is intended to include the degree of error associated with measurement of the particular quantity and/or manufacturing tolerances based upon the equipment available at the time of filing the application.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present invention is not thus limited. Rather, the present invention can be modified within the scope of the appended claims. Accordingly, the present invention is not to be seen as limited by the foregoing description, but is only limited by the scope of the appended claims.

## Claims

1. A method (500) of monitoring an elevator car (103) within an elevator system (101), the method comprising:
obtaining (504) a health level (710) of the elevator system (101) at a first elevator car location (730a), by processing, by a controller (212) of a sensing apparatus (210), sound detected by a microphone (230), light detected by a light sensor (226), humidity detected by a humidity sensor (232), temperature detected by a temperature sensor (234), accelerations (312) detected by an inertial measurement unit sensor (218), and/or pressure data (314) detected by a pressure sensor (228) in order to determine the health level (710), wherein the health level (710) is a graded scale indicating the health of the elevator system (101);
determining (506) a first identifier (740a) for the first elevator car location (730a);
displaying (508) the health level (710) for the elevator system (101) at the first elevator car location (730a) and the first identifier (740a) for the first elevator car location (730a) on a display device (650);
determining (510) a current location of an individual (750) within the elevator system (101); and
displaying (512) the location of the individual (750) within the elevator system (101) on the display device (650).

2. The method of claim 1, wherein prior to displaying the health level (710) for the elevator system (101) at the first elevator car location (730a) and the first identifier (740a) for the first elevator car location (730a) on a display device (650), the method further comprises:
normalizing the first identifier (740a) for the first elevator car location (730a) to a standard value.

3. The method of claim 1 or 2, wherein determining a current location of an individual (750) within the elevator system (101), further comprises:
detecting an ambient air pressure proximate the individual using a pressure sensor (690) of the mobile device (600); and
determining an elevation in response to the ambient air pressure.

4. The method of any preceding claim, wherein determining a current location of an individual (750) within the elevator system (101), further comprises:
detecting a wireless signal of the mobile device (600) being carried by an individual; and
determining received signal strength of the mobile device (600); and
determining an elevation of the individual in response to the received signal strength of the mobile device (600).

5. The method of any preceding claim, wherein determining a current location of an individual (750) within the elevator system (101), further comprises:
determining that the individual is currently located within the elevator car (103) by tracking a location of the mobile device (600);
determining a current location of the elevator car (103); and
determining that the current location of the individual (750) is equivalent to the current location of the elevator car (103).

6. The method of any preceding claim, wherein the current location of the individual (750) is located at the first elevator car location (730a), or
wherein the current location of the individual (750) is not located at the first elevator car location (730a).

7. The method of any preceding claim, further comprising:
obtaining a health level (710) of the elevator system (101) at a second elevator car location;
determining a second identifier (740b) for the second elevator car location (730b); and
displaying the health level (710) for the elevator system (101) at the second elevator car location (730b) and the second identifier (740b) for the second elevator car location (730b) on a display device (650).

8. The method of claim 7, wherein prior to displaying the health level (710) for the elevator system (101) at the first elevator car location (730a) and the first identifier (740a) for the first elevator car location (730a) on a display device (650), the method further comprises: normalizing the first identifier (740a) for the first elevator car location (730a) to a standard value, and
wherein prior to displaying the health level (710) for the elevator system (101) at the second elevator car location (730b) and the second identifier (740b) for the second elevator car location (730b) on a display device (650), the method further comprises normalizing the first identifier (740a) for the first elevator car location (730a) to a standard value.

9. The method of claim 7 or 8, wherein the current location of the individual (750) is located at the second elevator car location (730b), or
wherein the current location of the individual (750) is not located at the second elevator car location (730b).

10. A controller (212) for monitoring an elevator car (103) within an elevator system (101), the controller (212) comprising:
a processor (214); and
a memory (216) comprising computer-executable instructions that, when executed by the processor (214), cause the processor (214) to perform the method according to any of claims 1 to 9.

11. A computer program product embodied on a non-transitory computer readable medium, the computer program product including instructions that, when executed by the processor (214) of the controller (212) according to claim 10, cause the processor (214) to perform the method of monitoring an elevator car (103) according to any of claims 1 to 9.

## Patentansprüche

1. Verfahren (500) zum Überwachen einer Aufzugskabine (103) innerhalb eines Aufzugssystems (101), wobei das Verfahren umfasst:
Ermitteln (504) eines Betriebszustands (710) des Aufzugssystems (101) an einem ersten Aufzugskabinenort (730a) durch Verarbeiten, durch eine Steuerung (212) einer Erfassungsvorrichtung (210), von Schall, der von einem Mikrofon (230) erfasst wird, von Licht, das von einem Lichtsensor (226) erfasst wird, von Feuchtigkeit, die von einem Feuchtigkeitssensor (232) erfasst wird, von Temperatur, die von einem Temperatursensor (234) erfasst wird, von Beschleunigungen (312), die von einem Trägheitsmesseinheitssensor (218) erfasst werden, und/oder von Druckdaten (314), die von einem Drucksensor (228) erfasst werden, um den Betriebszustand (710) zu bestimmen, wobei der Betriebszustand (710) eine abgestufte Skala ist, die den Zustand des Aufzugssystems (101) angibt;
Bestimmen (506) einer ersten Kennung (740a) für den ersten Aufzugskabinenort (730a);
Anzeigen (508) des Betriebszustands (710) für das Aufzugssystem (101) an dem ersten Aufzugskabinenort (730a) und der ersten Kennung (740a) für den ersten Aufzugskabinenort (730a) auf einem Anzeigegerät (650);
Bestimmen (510) eines aktuellen Orts einer Person (750) innerhalb des Aufzugssystems (101); und
Anzeigen (512) des Orts der Person (750) innerhalb des Aufzugssystems (101) auf dem Anzeigegerät (650).

2. Verfahren nach Anspruch 1, wobei das Verfahren vor dem Anzeigen des Betriebszustands (710) für das Aufzugssystem (101) an dem ersten Aufzugskabinenort (730a) und der ersten Kennung (740a) für den ersten Aufzugskabinenort (730a) auf einem Anzeigegerät (650) ferner umfasst:
Normalisieren der ersten Kennung (740a) für den ersten Aufzugskabinenort (730a) auf einen Standardwert.

3. Verfahren nach Anspruch 1 oder 2, wobei das Bestimmen eines aktuellen Orts einer Person (750) innerhalb des Aufzugssystems (101) ferner umfasst:
Erfassen eines Umgebungsluftdrucks in der Nähe der Person unter Verwendung eines Drucksensors (690) des mobilen Geräts (600);
und
Bestimmen einer Höhe als Reaktion auf den Umgebungsluftdruck.

4. Verfahren nach einem der vorhergehenden Ansprüche, wobei das Bestimmen eines aktuellen Orts einer Person (750) innerhalb des Aufzugssystems (101) ferner umfasst:
Erfassen eines Funksignals des mobilen Geräts (600), das von einer Person getragen wird; und
Bestimmen einer empfangenen Signalstärke des mobilen Geräts (600); und
Bestimmen einer Höhe der Person als Reaktion auf die empfangene Signalstärke des mobilen Geräts (600).

5. Verfahren nach einem der vorhergehenden Ansprüche, wobei das Bestimmen eines aktuellen Orts einer Person (750) innerhalb des Aufzugssystems (101) ferner umfasst:
Bestimmen, dass sich die Person aktuell innerhalb der Aufzugskabine (103) befindet, durch Verfolgen des Orts des mobilen Geräts (600);
Bestimmen eines aktuellen Orts der Aufzugskabine (103); und
Bestimmen, dass der aktuelle Ort der Person (750) dem aktuellen Ort der Aufzugskabine (103) entspricht.

6. Verfahren nach einem der vorhergehenden Ansprüche, wobei sich der aktuelle Ort der Person (750) an dem ersten Aufzugskabinenort (730a) befindet, oder
wobei sich der aktuelle Ort der Person (750) nicht an dem ersten Aufzugskabinenort (730a) befindet.

7. Verfahren nach einem der vorhergehenden Ansprüche, ferner umfassend:
Ermitteln eines Betriebszustands (710) des Aufzugssystems (101) an einem zweiten Aufzugskabinenort;
Bestimmen einer zweiten Kennung (740b) für den zweiten Aufzugskabinenort (730b); und
Anzeigen des Betriebszustands (710) für das Aufzugssystem (101) an dem zweiten Aufzugskabinenort (730b) und der zweiten Kennung (740b) für den zweiten Aufzugskabinenort (730b) auf einem Anzeigegerät (650).

8. Verfahren nach Anspruch 7, wobei das Verfahren vor dem Anzeigen des Betriebszustands (710) für das Aufzugssystem (101) an dem ersten Aufzugskabinenort (730a) und der ersten Kennung (740a) für den ersten Aufzugskabinenort (730a) auf einem Anzeigegerät (650) ferner umfasst: Normalisieren der ersten Kennung (740a) für den ersten Aufzugskabinenort (730a) auf einen Standardwert, und
wobei das Verfahren vor dem Anzeigen des Betriebszustands (710) für das Aufzugssystem (101) an dem zweiten Aufzugskabinenort (730b) und der zweiten Kennung (740b) für den zweiten Aufzugskabinenort (730b) auf einem Anzeigegerät (650) ferner ein Normalisieren der ersten Kennung (740a) für den ersten Aufzugskabinenort (730a) auf einen Standardwert umfasst.

9. Verfahren nach Anspruch 7 oder 8, wobei sich der aktuelle Ort der Person (750) an dem zweiten Aufzugskabinenort (730b) befindet, oder
wobei sich der aktuelle Ort der Person (750) nicht an dem zweiten Aufzugskabinenort (730b) befindet.

10. Steuerung (212) zum Überwachen einer Aufzugskabine (103) innerhalb eines Aufzugssystems (101), wobei die Steuerung (212) umfasst:
einen Prozessor (214); und
einen Speicher (216), der computerausführbare Anweisungen umfasst, die bei Ausführung durch den Prozessor (214) den Prozessor (214) dazu veranlassen, das Verfahren nach einem der Ansprüche 1 bis 9 durchzuführen.

11. Computerprogrammprodukt, das auf einem nichtflüchtigen computerlesbaren Medium ausgeführt ist, wobei das Computerprogrammprodukt Anweisungen beinhaltet, die bei Ausführung durch den Prozessor (214) der Steuerung (212) nach Anspruch 10 den Prozessor (214) dazu veranlassen, das Verfahren nach einem der Ansprüche 1 bis 9 durchzuführen.

## Revendications

1. Procédé (500) de surveillance d'une cabine d'ascenseur (103) à l'intérieur d'un système d'ascenseur (101), le procédé comprenant :
l'obtention (504) d'un niveau de santé (710) du système d'ascenseur (101) au niveau d'un premier emplacement de cabine d'ascenseur (730a), par traitement, par un dispositif de commande (212) d'un appareil de détection (210), du son détecté par un microphone (230), de la lumière détectée par un capteur de lumière (226), de l'humidité détectée par un capteur d'humidité (232), de la température détectée par un capteur de température (234), des accélérations (312) détectées par un capteur d'unité de mesure inertielle (218) et/ou des données de pression (314) détectées par un capteur de pression (228) afin de déterminer le niveau de santé (710), dans lequel le niveau de santé (710) est une échelle graduée indiquant l'état de santé du système d'ascenseur (101) ;
la détermination (506) d'un premier identifiant (740a) pour le premier emplacement de cabine d'ascenseur (730a) ;
l'affichage (508) du niveau de santé (710) pour le système d'ascenseur (101) au niveau du premier emplacement de cabine d'ascenseur (730a) et du premier identifiant (740a) pour le premier emplacement de cabine d'ascenseur (730a) sur un dispositif d'affichage (650) ;
la détermination (510) d'un emplacement actuel d'une personne (750) à l'intérieur du système d'ascenseur (101) ; et
l'affichage (512) de l'emplacement de la personne (750) à l'intérieur du système d'ascenseur (101) sur le dispositif d'affichage (650).

2. Procédé selon la revendication 1, dans lequel, avant d'afficher le niveau de santé (710) pour le système d'ascenseur (101) au niveau du premier emplacement de cabine d'ascenseur (730a) et le premier identifiant (740a) pour le premier emplacement de cabine d'ascenseur (730a) sur un dispositif d'affichage (650), le procédé comprend en outre :
la normalisation du premier identifiant (740a) pour le premier emplacement de cabine d'ascenseur (730a) à une valeur standard.

3. Procédé selon la revendication 1 ou la revendication 2, dans lequel la détermination d'un emplacement actuel d'une personne (750) à l'intérieur du système d'ascenseur (101) comprend en outre :
la détection d'une pression atmosphérique ambiante à proximité de la personne en utilisant un capteur de pression (690) du dispositif mobile (600) ; et
la détermination d'une élévation en réponse à la pression atmosphérique ambiante.

4. Procédé selon une quelconque revendication précédente, dans lequel la détermination d'un emplacement actuel d'une personne (750) à l'intérieur du système d'ascenseur (101) comprend en outre :
la détection d'un signal sans fil du dispositif mobile (600) porté par une personne ; et
la détermination d'une force de signal reçu du dispositif mobile (600) ; et
la détermination d'une élévation de la personne en réponse à la force de signal reçu du dispositif mobile (600).

5. Procédé selon une quelconque revendication précédente, dans lequel la détermination d'un emplacement actuel d'une personne (750) à l'intérieur du système d'ascenseur (101) comprend en outre :
la détermination que la personne se trouve actuellement à l'intérieur de la cabine d'ascenseur (103) en suivant un emplacement du dispositif mobile (600) ;
la détermination d'un emplacement actuel de la cabine d'ascenseur (103) ; et
la détermination que l'emplacement actuel de la personne (750) est équivalent à l'emplacement actuel de la cabine d'ascenseur (103).

6. Procédé selon une quelconque revendication précédente, dans lequel l'emplacement actuel de la personne (750) est situé au niveau du premier emplacement de cabine d'ascenseur (730a), ou dans lequel l'emplacement actuel de la personne (750) ne se trouve pas au niveau du premier emplacement de cabine d'ascenseur (730a).

7. Procédé selon une quelconque revendication précédente, comprenant en outre :
l'obtention d'un niveau de santé (710) du système d'ascenseur (101) au niveau d'un second emplacement de cabine d'ascenseur ;
la détermination d'un second identifiant (740b) pour le second emplacement de cabine d'ascenseur (730b) ; et
l'affichage du niveau de santé (710) pour le système d'ascenseur (101) au niveau du second emplacement de cabine d'ascenseur (730b) et du second identifiant (740b) pour le second emplacement de cabine d'ascenseur (730b) sur un dispositif d'affichage (650).

8. Procédé selon la revendication 7, dans lequel, avant d'afficher le niveau de santé (710) pour le système d'ascenseur (101) au niveau du premier emplacement de cabine d'ascenseur (730a) et le premier identifiant (740a) pour le premier emplacement de cabine d'ascenseur (730a) sur un dispositif d'affichage (650), le procédé comprend en outre : la normalisation du premier identifiant (740a) pour le premier emplacement de cabine d'ascenseur (730a) à une valeur standard, et
dans lequel, avant d'afficher le niveau de santé (710) pour le système d'ascenseur (101) au niveau du second emplacement de cabine d'ascenseur (730b) et le second identifiant (740b) pour le second emplacement de cabine d'ascenseur (730b) sur un dispositif d'affichage (650), le procédé comprend en outre la normalisation du premier identifiant (740a) pour le premier emplacement de cabine d'ascenseur (730a) à une valeur standard.

9. Procédé selon la revendication 7 ou la revendication 8, dans lequel l'emplacement actuel de la personne (750) est situé au niveau du second emplacement de cabine d'ascenseur (730b), ou
dans lequel l'emplacement actuel de la personne (750) ne se trouve pas au niveau du second emplacement de cabine d'ascenseur (730b).

10. Dispositif de commande (212) pour surveiller une cabine d'ascenseur (103) à l'intérieur d'un système d'ascenseur (101), le dispositif de commande (212) comprenant :
un processeur (214) ; et
une mémoire (216) comprenant des instructions exécutables par ordinateur qui, lorsqu'elles sont exécutées par le processeur (214), amènent le processeur (214) à réaliser le procédé selon l'une quelconque des revendications 1 à 9.

11. Produit de programme informatique intégré sur un support non transitoire lisible par ordinateur, le produit de programme informatique comportant des instructions qui, lorsqu'elles sont exécutées par le processeur (214) du dispositif de commande (212) selon la revendication 10, amènent le processeur (214) à réaliser le procédé de surveillance d'une cabine d'ascenseur (103) selon l'une quelconque des revendications 1 à 9.
